# FASCICULE DE BREVET EUROPEEN

(11) **EP 2 139 343 B1**
(45) Date de publication et mention de la délivrance du brevet: **13.01.2016**
(21) Numéro de dépôt: 08805505.8
(22) Date de dépôt: 24.04.2008
(51) Int. Cl.: A22C 7/00, A23P 1/08

(54) **DISPOSITIF DE FABRICATION DE PORTIONS DE PRODUITS ALIMENTAIRES TEXTURÉES**
VORRICHTUNG ZUR HERSTELLUNG TEXTURIERTER TEILE VON LEBENSMITTELPRODUKTEN
DEVICE FOR MAKING TEXTURED PORTIONS OF FOOD PRODUCTS

(30) Priorité: 27.04.2007 FR 0703109
(43) Date de publication de la demande: 06.01.2010
(73) Titulaire: Marel France, 56150 Baud (FR)
(72) Inventeur: LE PAIH, Jacques, F-56930 Plumeliau (FR)
(74) Mandataire: Novagraaf Technologies
(86) Numéro de dépôt international: PCT/FR2008/000587
(87) Numéro de publication internationale: WO 2008/145860

(56) Documents cités:
- WO-A-03/099021
- FR-A- 2 476 448
- FR-A- 2 884 287
- GB-A- 2 294 380
- US-A- 4 797 291
- US-A- 5 514 397

## Description

La présente invention concerne un dispositif de fabrication de portions de produits alimentaires, et plus particulièrement de portions de produits alimentaires texturées à partir de produits alimentaires en morceaux, notamment de pavés de viande fraîche en muscle.

Il est connu notamment par le document brevet EP 1397047 un dispositif de fabrication de portions de viande hachée, tel que des steaks hachés, comprenant un hachoir débitant une veine de viande hachée, ayant une structure filaire de type « cheveux d'ange » créée par la grille de sortie du hachoir, un convoyeur à bande sans fin transportant la veine de viande hachée en sortie du hachoir et un dispositif de coupe et de formage comprenant des moyens de coupe pour découper la veine de viande en portions, des moyens de formage latéraux agissant simultanément de chaque côté de la veine de viande hachée pour former les contours des portions et des moyens de formage verticaux coopérant avec lesdits moyens de formage latéraux pour conférer auxdites portions l'épaisseur souhaitée.

Le hachoir est associé à un organe de régulation de débit dit poussoir, comprenant classiquement une pompe, par exemple à palettes ou à pistons, alimentée en entrée par une trémie et dont la sortie de refoulement est équipée dudit hachoir.

Le document brevet EP 1 509 089 décrit un dispositif analogue pour la fabrication de steaks hachés fourrés d'une garniture. Le hachoir est équipé en sortie de deux becs de distribution pour former une veine de viande hachée inférieure et une veine de viande hachée supérieure déposée respectivement sur un convoyeur principal et un convoyeur secondaire. La garniture est déposée sur la veine de viande inférieure, et la veine de viande supérieure est ensuite amenée en recouvrement de la veine de viande inférieure et de la garniture déposée sur cette dernière pour former une veine de viande hachée fourrée, qui passe ensuite dans le dispositif de coupe et de formage précité.

De tels dispositifs sont prévus pour fabriquer des portions à partir de viande hachée et extrudée par les trous de la grille d'un hachoir. Les produits finaux obtenus sont texturés en fils de viande hachée orientés longitudinalement, et ont donc un aspect filaire.

Le but de la présente invention est de proposer un dispositif permettant d'obtenir de nouveaux produits ayant une texture différente.

A cet effet, la présente invention propose un dispositif permettant la fabrication de produits finaux ayant un aspect texturé analogue à celui du produit alimentaire de départ qui est introduit dans la pompe, et en particulier dans le cas de viande, gardant l'aspect fibreux des morceaux de viande de départ. Le dispositif selon l'invention peut être utilisé pour la fabrication de portions à partir de tout type de produit alimentaire en morceaux, tel que de la viande en muscles, du poisson en filets, des légumes en morceaux tels que des carottes par exemple.

La présente invention a pour objet un dispositif de fabrication de portions de produits alimentaires en morceaux, en particulier de pavés de viandes fraîches en muscles, comprenant au moins une pompe apte à délivrer en sortie un débit sensiblement constant de produit alimentaire en morceaux, une conduite de distribution tubulaire connectée à la sortie de refoulement de ladite pompe pour recevoir dans son passage principal interne le produit alimentaire sortant de la pompe, et comprenant au moins un orifice de distribution, et des moyens de coupe et de formage agissant sur le produit alimentaire distribué par l'orifice de sortie de la conduite de distribution pour former des portions de produits alimentaires, caractérisé en ce que ladite conduite de distribution est équipée d'un système de coupe comprenant au moins un moyen de coupe traversant transversalement de part en part ledit passage principal interne de la conduite de distribution, avec un bord de coupe rectiligne tourné vers le sens d'écoulement du flux de produit alimentaire pour découper le produit alimentaire en au moins deux couches, de manière à obtenir des portions de produit alimentaire texturées en sortie des moyens de formage et de coupe.

Selon l'invention, le système de distribution est équipé d'au moins un moyen de coupe apte à découper le flux de viande en au moins deux couches. La conduite de distribution est connectée directement à la sortie de refoulement de la pompe, sans intercaler de système de hachage, de sorte que, dans le cas de produits alimentaires en morceaux, on obtient un produit final nouveau, texturé, de type multicouches, multi-bandes et/ou en petits morceaux, dont l'aspect extérieur correspond à la texture du produit alimentaire en morceaux de départ. Dans le cas d'un produit alimentaire en morceaux tels que de la viande en muscle, notamment des escalopes de dinde ou poulet par exemple ou des morceaux de viande de boeuf, le produit final garde l'aspect fibreux de la viande de départ. Ledit moyen de coupe est un moyen de coupe dynamique, tel que par exemple de type lame plane oscillante couplée à un système de mouvement en va-et-vient, lame circulaire rotative, lame couplée à un générateur à ultrasons, faisceau laser, et/ou jet d'eau.

Selon une particularité ladite pompe est une pompe de type pompe rotative à pistons, comprenant un stator définissant une cavité cylindrique, un rotor ou barillet logé dans ladite cavité cylindrique, apte à être entraîné en rotation par un moteur, ledit rotor comprenant un ensemble d'alésages circonférentiellement espacés, dans lesquels sont montés des pistons, une came mécanique coopérant avec les pistons pour provoquer lors de la rotation du barillet un mouvement alterné de va-et-vient desdits pistons entre une position basse et une position haute, un couvercle fermant la cavité cylindrique, un orifice d'alimentation venant en communication avec au moins une chambre cylindrique formée par un alésage cylindrique du barillet et son piston associé, et destiné à être en communication avec une trémie, un orifice de refoulement apte à venir simultanément en communication avec au moins deux chambres cylindriques consécutives.

Selon une autre particularité, afin de garantir un débit constant de produit alimentaire et obtenir ainsi un portionnement à poids sensiblement constant, ladite pompe est telle que définie dans la demande de brevet FR 2 884 287, ladite pompe comprenant
- des moyens de mise sous vide des chambres cylindriques pour leur remplissage, lesdits moyens de mise sous vide comportant au moins un canal de mise sous vide débouchant dans la partie inférieure de chaque chambre cylindrique, lesdits moyens de mise sous vide étant aptes à mettre sous vide par le bas chaque chambre cylindrique par son canal de mise sous vide lorsque son piston associé est en position basse,
- et/ou des moyens de coupe comportant une lame disposée le long du bord aval de l'orifice d'alimentation, pour couper les morceaux de produits dépassant des chambres cylindriques lors de leur passage au-delà de l'orifice d'alimentation.

Selon une autre particularité, le système de coupe de la conduite de distribution comprend un premier ensemble de moyens de coupe, disposées parallèlement les uns au dessus des autres, par exemple horizontalement, pour découper le produit alimentaire provenant de la pompe en plusieurs couches. La distance entre deux moyens de coupe adjacents, par exemple deux lames planes adjacentes, est par exemple comprise entre 1 et 20 mm, selon le produit final souhaité, de préférence entre 2 et 7mm.

Selon une autre particularité, le système de coupe comprend un deuxième ensemble de moyens de coupe disposées parallèlement les uns au dessus des autres, en aval du premier ensemble de moyens de coupe, pour découper en bandes chacune des couches résultant du premier ensemble de moyens de coupe, le premier ensemble de moyens de coupe et le second ensemble de moyens de coupe étant de préférence disposés perpendiculairement l'un à l'autre. Pour chaque ensemble, la distance entre deux moyens de coupe adjacents est comprise entre 1 et 20 mm, de préférence entre 2 et 7mm.

Selon un mode de réalisation, chaque moyen de coupe du système de coupe comprend une lame plane oscillante.

Avantageusement, chaque ensemble de lames comprend des premières lames oscillantes aptes à être déplacées par un premier système de déplacement dans un mouvement de va-de-vient, et des secondes lames oscillantes, intercalées entre les premières lames oscillantes, et déplacées par un second système de déplacement dans un mouvement de va et vient opposé à celui des premières lames oscillantes.

Selon un mode de réalisation, les moyens de coupe et de formage sont constitués par un dispositif de coupe et de formage d'un type décrit dans les documents brevets EP 1 397 047 et EP 1 509 089 précités. Un tel dispositif comprend une bande transporteuse de formage pour recevoir une veine de produit alimentaire issue de la conduite de distribution, et le long de celle-ci, des moyens pour couper ladite veine en portions, des moyens de formage latéraux agissant simultanément de chaque côté de ladite veine pour former le contour desdites portions, et des moyens de formage verticaux coopérant avec lesdits moyens de formage latéraux pour conférer auxdites portions l'épaisseur souhaitée.

Selon une particularité, la conduite de distribution est équipée d'un système de coupe comprenant un moyen de coupe, tel qu'une lame plane oscillante horizontale, disposé en amont de moyens de séparation pour séparer le passage principal interne de la conduite en deux passages secondaires, de manière à former une veine de produit alimentaire supérieure et une veine de produit alimentaire inférieure, ledit dispositif comprenant, de préférence, une bande de transport principale pour recevoir la veine inférieure de produit alimentaire, une bande de transport secondaire, défilant en continue, disposée au-dessus de la bande de transport principale pour recevoir la veine supérieure, et éventuellement, des moyens de dépôt de garniture aptes à déposer une garniture, de préférence latéralement, sur la veine inférieure, ladite bande secondaire étant alors apte à transporter et déposer ladite veine supérieure sur ladite veine inférieure et la garniture.

Selon un autre mode de réalisation, les moyens de coupe et de formage comprennent un couteau, de préférence rotatif, apte à trancher le produit alimentaire sortant de la conduite de distribution, une bande de transport pour récupérer les tranches formées par ledit couteau, et de préférence, le long de cette bande de transport, des moyens de formage latéraux pour former le contour desdites portions, et des moyens de formage verticaux pour conférer auxdites portions l'épaisseur souhaitée.

Selon des variantes de réalisation, le dispositif comprend plusieurs pompes, par exemple deux pompes, la conduite de distribution étant connectée à la sortie de refoulement de chaque pompe pour recevoir dans son passage principal interne le produit alimentaire sortant de chaque pompe, les pompes pouvant être utilisées pour délivrer des produits alimentaires différents.

La présente invention a également pour objet un procédé de fabrication de portions de produits alimentaires en morceaux, en particulier de pavés de viandes fraîches en muscles, caractérisé en ce qu'il comprend une étape a) de formation d'un flux sensiblement constant d'un produit alimentaire en morceaux dans une conduite de distribution, une étape b) de découpe dans ladite conduite de distribution du produit alimentaire en au moins deux couches, et une étape c) de coupe et de formage du produit alimentaire en sortie de conduite de distribution pour former des portions de produit alimentaire ayant la texture du produit alimentaire de départ.

Selon une particularité, à l'étape a), le produit alimentaire est découpé en une pluralité de couches horizontales continues superposées, par exemple de 1 à 20mm d'épaisseur, de préférence de 2 à 7 mm d'épaisseur, chaque couche horizontale de produit alimentaire pouvant en outre être découpée en une pluralité de bandes continues, de 1 à 20 mm de largeur, de préférence de 2 à 7mm de largeur, soit des bandes ayant des sections transversales de 1 à 400 mm², de préférence de 4 à environ 50 mm².

Selon une particularité, le produit alimentaire en sortie de la conduite de distribution se présente sous la forme d'au moins une veine continue, l'étape c) comprenant la coupe et la mise en forme de ladite veine en portions de produit alimentaire en couches superposées ou en bandes longitudinales. Selon un mode de réalisation, le produit alimentaire en sortie de la conduite de distribution se présente sous la forme d'une veine inférieure continue et d'une veine supérieure continue amenée en recouvrement de la veine inférieure, le procédé comprenant en outre une étape consistant à déposer une garniture sur la veine inférieure avant son recouvrement par la veine supérieure, pour former une veine principale continue fourrée, l'étape c) comprenant la coupe et la mise en forme de ladite veine principale en portions de produit alimentaire fourrées d'une garniture.

Selon un autre mode de réalisation, à l'étape c), le produit alimentaire en sortie de conduite de distribution est découpé en tranches pour former après mise en forme des portions de produit alimentaire en bandes transversales ou en petits morceaux de produit alimentaire.

L'invention a également pour objet des produits finaux obtenus par le procédé et le dispositif de fabrication définis ci-dessus.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés sur lesquels :
- la figure 1 représente une vue schématique de dessus d'un dispositif de fabrication de portions selon un premier mode de réalisation de l'invention, pour la fabrication de pavés de viande émincée en bandes longitudinales et fourrés, sur laquelle la pompe à pistons et le dispositif de coupe et de formage ne sont représentés que partiellement ;
- la figure 2 est une vue en coupe longitudinale selon le plan de coupe II-II du dispositif de la figure 1, sans la pompe ;
- la figure 3 est une vue en perspective du dispositif de la figure 1, sans la pompe ;
- la figure 4 est une vue schématique en perspective d'un produit final obtenu avec un dispositif analogue à celui illustré aux figures 1 à 3 ;
- les figures 5 et 6 sont des vues respectivement en coupe longitudinale et en perspective analogues aux figures 2 et 3, d'une première variante de réalisation du dispositif des figures 1 à 3, pour la fabrication de pavés de viande émincée en bandes, non fourrés ;
- les figures 7 et 8 sont des vues respectivement en coupe longitudinale et en perspective analogues aux figures 2 et 3, d'une deuxième variante de réalisation du dispositif des figures 1 à 3, pour la fabrication de pavés de viande en couches superposées fourrés ;
- la figure 9 est une vue schématique en perspective d'un pavé multicouches fourré obtenu avec le dispositif illustré aux figures 7 et 8 ;
- la figure 10 est une vue en perspective d'une troisième variante de réalisation du dispositif des figures 1 à 3, pour la fabrication de pavés de viande en couches superposées non fourrés ;
- les figures 11, 12 et 13 sont respectivement des vues schématiques en perspective, de dessus et en coupe longitudinale selon le plan XIII-XIII d'un dispositif selon un deuxième mode de réalisation de l'invention, pour la fabrication de pavés de viande émincée en petits morceaux ; et,
- la figure 14 est une vue en perspective d'un dispositif selon une variante de réalisation du deuxième mode de réalisation des figures 11 à 13 pour la réalisation de pavés de viande émincée en bandes transversales.

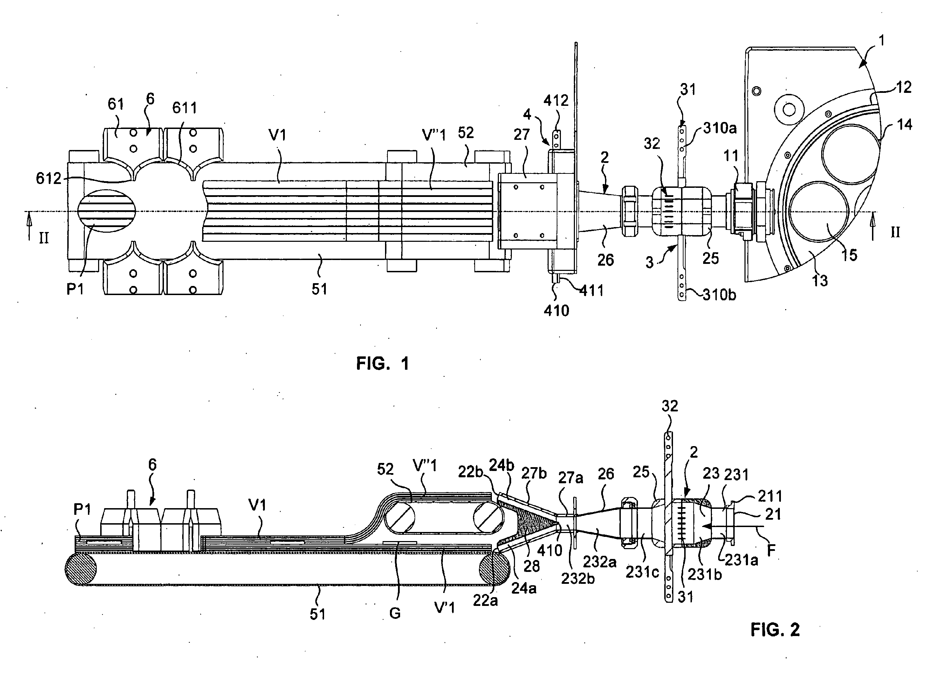

Considérant d'abord les figures 1 à 3, elles illustrent de manière schématique un dispositif de fabrication de portions de produits alimentaires selon un premier mode de réalisation destiné en particulier à la fabrication de pavés de viande émincée en bandes ou bâtonnets et pourvus d'une garniture intérieure, à partir de morceaux de viande, non hachée.

Le dispositif comprend une pompe 1 illustrée schématiquement et partiellement sur la figure 1, équipée à sa sortie de refoulement 11 d'une conduite de distribution 2. Suivant la figure 2, ladite conduite de distribution comprend un orifice d'entrée 21 par laquelle la conduite est connectée à la sortie de refoulement de ladite pompe pour recevoir dans son passage interne principal 23 les morceaux de viande délivrés par la pompe, ce passage principal se subdivisant en deux passages secondaires 24a et 24b définissant en aval en deux orifices de distribution 22a, 22b, décalés verticalement l'un de l'autre, pour former une veine de viande inférieure V'1 et une veine de viande supérieure V"1.

La pompe est une pompe à pistons du type décrit dans le document brevet FR 2 884 287, comprenant un stator 12 définissant une cavité cylindrique ; un rotor ou barillet 13 logé dans ladite cavité cylindrique, apte à être entraîné en rotation par un moteur, ledit rotor comprenant un ensemble d'alésages 14 circonférentiellement espacés, dans lesquels sont montés des pistons 15 ; une came mécanique coopérant avec les pistons pour provoquer lors de la rotation du barillet un mouvement alterné de va-et-vient desdits pistons entre une position basse et une position haute, un couvercle (non représenté) fermant la cavité cylindrique ; un orifice d'alimentation venant en communication avec au moins une chambre cylindrique formée par un alésage cylindrique du barillet et son piston associé, et destiné à être en communication avec une trémie d'alimentation dans laquelle sont placés les morceaux de viande ; et un orifice de refoulement qui est connecté à la sortie de refoulement 11 de la pompe et qui est apte à venir simultanément en communication avec au moins deux chambres cylindriques consécutives. Afin d'obtenir un remplissage sensiblement homogène des chambres cylindriques, sans vides, et ainsi obtenir un débit sensiblement constant de produits alimentaires en morceaux en sortie de pompe, la pompe comprend, tel que décrit en détails dans le document brevet précité, des moyens de mise sous vide des chambres cylindriques pour effectuer une aspiration par le bas dans les chambres cylindriques au moment de leur remplissage, et des moyens de coupe au niveau de l'orifice d'alimentation de la pompe pour couper les gros morceaux de viande dépassant des chambres cylindriques lors de leur passage au-delà de l'orifice d'alimentation.

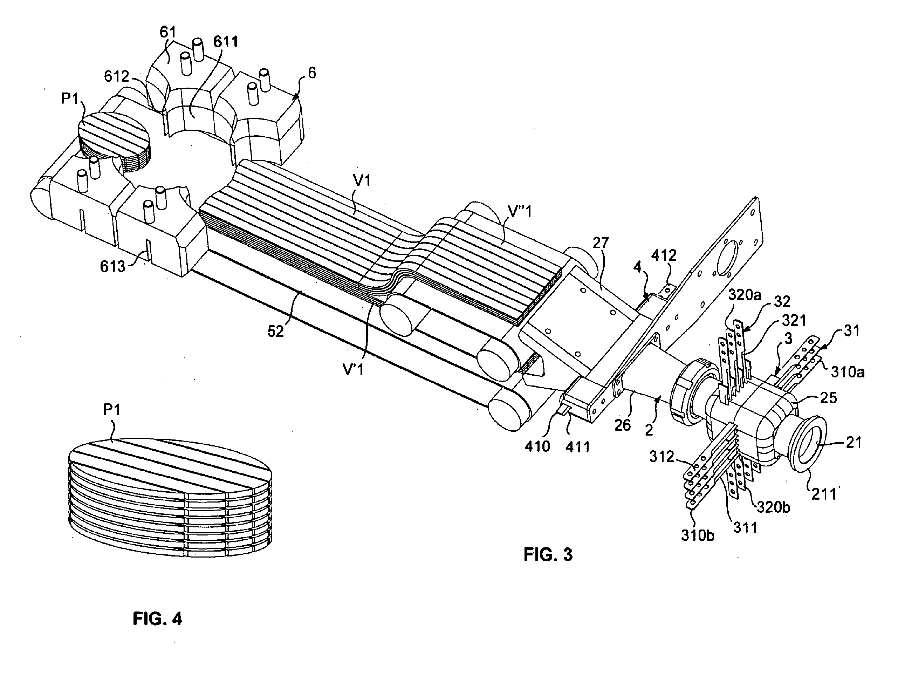

En référence en particulier à la figure 3, la conduite de distribution est équipée d'un premier système de coupe 3 qui comprend un premier ensemble 31 de lames planes oscillantes 310a, 310b, disposées horizontalement, parallèlement les unes au dessus des autres pour découper les morceaux de viande provenant de la pompe en couches horizontales. Ces lames oscillantes horizontales comportent des bords de coupe 311 sensiblement rectilignes, tournés vers le sens d'écoulement du flux de viande F (Fig.2) dans la conduite, et disposés sensiblement selon un même plan transversal. Chaque lame traverse la conduite de part en part au niveau de son passage principal, et est montée coulissante sur la conduite en passant par deux fentes opposées de la paroi de la conduite, disposées symétriquement de part et d'autre du plan longitudinal vertical II-II. Chaque lame comprend une extrémité d'assemblage 312 pour son assemblage à un système de déplacement (non représenté) apte à déplacer la lame dans un mouvement de va-et-vient. Les lames coulissent de manière sensiblement étanche dans les fentes de la conduite. Ce premier ensemble 31 comprend des premières lames 310a assemblées d'un même côté de la conduite par leur extrémité d'assemblage 312 à un premier système de déplacement (non représenté), et des secondes lames 310b venant s'intercaler entre les première lames, et assemblées par leur extrémité d'assemblage à un second système de déplacement. Ce montage des lames avec deux systèmes de déplacement permet, par une commande appropriée de ces derniers, d'obtenir un mouvement de va et vient des premières lames opposé à celui des secondes lames, et donc de limiter ou annuler au moins en partie les efforts transversaux appliqués par les lames oscillantes sur les morceaux de viande lors de sa découpe.

Le premier système de coupe 3 comprend un deuxième ensemble 32 de lames oscillantes 320a, 320b qui est disposé perpendiculairement et en aval du premier ensemble 31 de lames oscillantes horizontales, pour découper les morceaux de viande en couches verticales, ou plus précisément pour découper en plusieurs bandes ou lamelles horizontales chacune des couches de viande horizontales superposées résultant du premier ensemble 31. Les lames planes verticales 320a, 320b de ce deuxième ensemble sont disposées verticalement, parallèlement les unes à côté des autres, avec des bords de coupe 321 sensiblement rectilignes, tournés vers le sens d'écoulement du flux de viande F et disposés sensiblement selon un même plan transversal. Chaque lame oscillante verticale traverse le conduit de part en part en passant par deux fentes opposées de la paroi du conduit, disposées symétriquement de part et d'autre du plan longitudinal horizontal de symétrie de la conduite. Ce second ensemble 32 comprend également des premières lames 320a assemblées par leur extrémité d'assemblage 312 à un système de déplacement pour être déplacées dans un mouvement alterné de va-et-vient opposé à celui de secondes lames 320b, intercalées entre les premières lames et assemblées à un second système de déplacement. Dans l'exemple illustré, le premier ensemble comprend 7 lames oscillantes horizontales, et le deuxième ensemble comprend 7 lames oscillantes verticales.

En référence à la figure 2, ces deux ensembles de lames sont disposés au niveau d'une portion dite de coupe 231 du passage principal, comprenant une partie amont 231a et une partie aval 231c dont les sections transversales circulaires correspondent sensiblement à celles de la sortie de refoulement de la pompe, et une partie centrale 231 b traversée par les lames, dont la section transversale circulaire est supérieure à celles des parties amont et aval, afin de tenir compte de l'encombrement des lames, et éviter une compression de la viande lors de son passage au niveau des lames.

En aval de la portion de coupe, le passage principal se prolonge par une portion dite de formage 232a,b comprenant une première partie 232a dont la section passe progressivement d'amont en aval d'une section circulaire à une section rectangulaire et une deuxième partie 232b de section rectangulaire constante correspondant à la section de la veine principale V1 que l'on souhaite obtenir. En aval de cette deuxième partie 232b, le passage principal se divise en deux passages secondaires 24a et 24b de section rectangulaire identique.

Comme illustré sur les figures 1 à 3, la conduite de distribution 23 est formée de trois pièces tubulaires assemblées les une aux autres : une première pièce 25, équipée d'une collerette 211 pour son montage sur la pompe, qui forme la portion de coupe 231a-c du passage principal; une deuxième pièce 26 formant la première partie 232a de la portion de formage du passage principal ; et une troisième pièce 27, en forme de divergent, comprenant une première partie 27a de section rectangulaire constante, définissant la deuxième partie 232b de la portion de formage du passage principal, cette première partie 27a se prolongeant par une deuxième partie 27b, dont la section rectangulaire augmente d'amont en aval, et dans laquelle est montée une pièce en forme de coin 28, de section longitudinale en triangle isocèle, pour former les deux passages secondaires 24a, 24b entre les surfaces principales de la pièce 28 en forme de coin et la paroi de la deuxième partie 27b de la troisième pièce.

La conduite de distribution est équipée d'un second système de coupe 4 comprenant une seule lame plane oscillante 410 horizontale traversant de part en part la conduite de distribution au niveau de la partie 232b de section rectangulaire constante de la portion de formage pour garantir la séparation du flux de viande du passage principal en deux flux de viande identiques vers les passages secondaires. La lame oscillante 410 passe par deux fentes latérales de la pièce 27 et est disposée le long de l'arête de la pièce 28 en forme de coin. Son bord de coupe 411 est positionné juste en amont de cette arête, et est tourné vers le sens d'écoulement du flux de viande, ou tel qu'illustré sur la figure 2, est montée coulissante dans une rainure de la pièce 28 en forme de coin et forme l'arête de ladite pièce en forme de coin. Cette lame de coupe est assemblée par son extrémité d'assemblage 412 à un système de déplacement en va-et-vient.

Les deux veines V'1 et V"1 sortant des orifices de distribution 24a et 24b sont chacune formée de couches superposées de lamelles continues. La veine inférieure V' est déposée sur le brin supérieur d'une bande de transport principale 51, tandis que la deuxième veine est reçue sur le brin supérieur d'une bande de transport secondaire 52, disposée au-dessus de la bande de transport principale 51, parallèlement à cette dernière, les deux bandes étant entraînées sensiblement en isovitesse.

Un distributeur de garniture (non représenté) est disposé en aval de la conduite de distribution pour déposer de la garniture à intervalles réguliers sur la veine inférieure V'1, sous forme de doses de nappage relativement liquide, ou bien sous forme de tranches G comme représenté sur les figures. Le distributeur de garniture est par exemple du type décrit dans le document brevet EP 1 509 089, et comprend une roue crantée de convoyage pour amener latéralement la garniture entre les deux bandes de transport 51 et 52. La bande de transport secondaire 52 est de longueur inférieure à celle de la bande de transport principale 51, et la veine supérieure V"1 est déposée en sortie de cette bande de transport secondaire 52 sur la veine inférieure V'1 et les tranches de garniture G venant d'être déposées, pour former la veine principale continue de viande lamellée et fourrée V1.

La veine principale est transférée à mesure de sa formation vers un dispositif de coupe et de formage 6, représenté partiellement et schématiquement sur les figures, fonctionnant en synchronisme avec la bande de transport principale 51, pour d'une part traiter la veine V1 à mesure de sa formation, et d'autre part effectuer les coupes de mise en portions sensiblement au milieu des intervalles entre les tranches de garniture successives.

Le dispositif de coupe et de formage 6 est du type décrit dans les documents brevets EP 1 397 047 et EP 1 509 089 précités, comprenant une bande de transport dite bande transporteuse de formage, destinée à faire avancer la veine principale V1 à mesure de sa formation, qui est en pratique avantageusement confondue avec la bande de transport principale 51 sur laquelle est constituée la veine principale V1. Le dispositif comprend le long de celle-ci, en aval de la bande de transport secondaire 52, des moyens pour couper ladite veine en portions, des moyens de formage latéraux agissant simultanément de chaque côté de ladite veine pour former le contour desdites portions, et des moyens de formage verticaux coopérant avec lesdits moyens de formage latéraux pour conférer auxdites portions l'épaisseur souhaitée. Les moyens de formage latéraux associés à la bande 52 comprennent des blocs de formage latéraux échancrés 61 qui défilent symétriquement en glissant de chaque côté et immédiatement au-dessus de celle-ci. Les blocs sont montés adjacents les uns à la suite des autres dans un même arrangement en boucle sans fin monté au-dessus de la bande 52. D'amont en aval sur la bande, les blocs 7 se rapprochent progressivement en vis-à-vis, jusqu'à se toucher pour former avec elle, par leurs échancrures 611, des alvéoles de formage, puis ils s'écartent à nouveau. Lesdits blocs de formage latéraux présentent chacun deux échancrures de chaque côté d'une pointe centrale 612, de telle manière que les alvéoles de formage se forment chacune entre deux paires consécutives de blocs de formage latéraux en regard. Seules deux paires consécutives de blocs de formage sont illustrées sur les figures. Les blocs comportent dans leur paroi inférieure des fentes 613 par lesquelles ils sont montés coulissants sur des glissières transversales qui forment les moyens de coupe. Un synchronisme est prévu entre le distributeur de garniture D et le défilement des glissières 42, pour que le sectionnement de la veine V s'effectue bien dans l'intervalle entre deux tranches de garniture. Les moyens de formage verticaux sont constitués d'éléments presseurs qui coopèrent avec les blocs de formage latéraux pour venir fermer supérieurement lesdites alvéoles lorsqu'elles se forment, puis y descendent en deux temps dans celles-ci, d'abord pour y effectuer le compactage désiré des portions, ensuite pour les transférer positivement à un niveau inférieur sur une bande transporteuse faisant suite à la bande 52, et assurant leur chargement dans des barquettes de conditionnement.

La figure 4 représente de manière très schématique un produit final obtenu P1 avec un dispositif similaire de celui décrit en référence aux figures 1 à 3, mais comprenant un premier ensemble de 7 lames oscillantes horizontales et un second ensemble de 5 lames oscillantes verticales. Le produit final présente une structure fibreuse en couches superposées de bandes disposées longitudinalement. La représentation de la figure 4 est bien entendu très schématique, les bandes étant en contact les unes des autres et sont formées à partir d'un ou plusieurs morceaux de viande. En comparaison d'un steak haché classique, le produit final garde la texture fibreuse des morceaux de viande de départ.

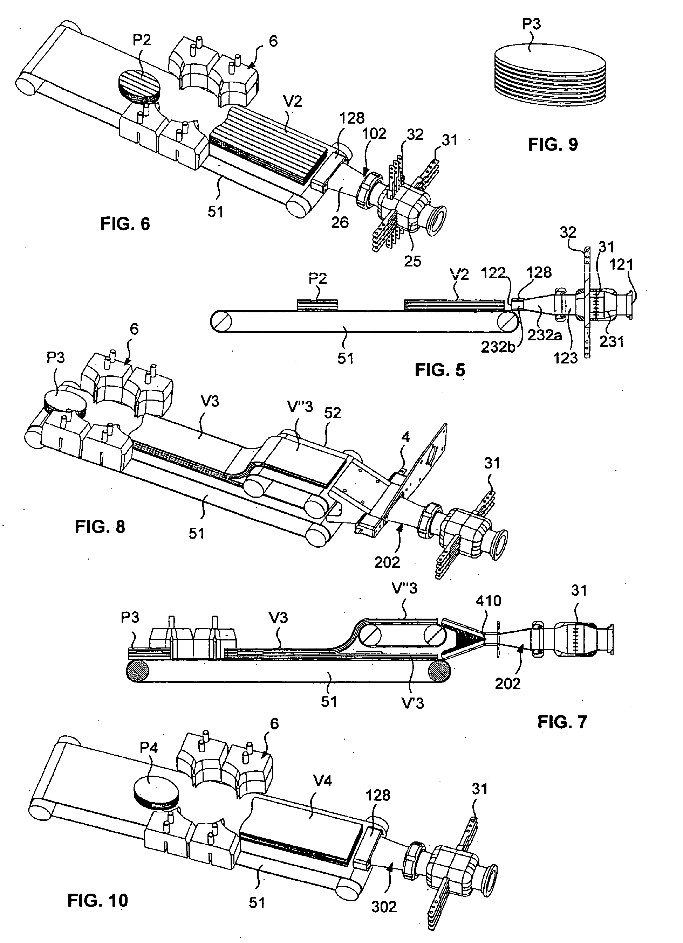

Les figures 5 et 6 illustrent une variante de réalisation du dispositif illustré aux figures 1 à 3 pour la fabrication d'un produit final P2 qui se différencie du produit P1 par le fait qu'il ne comprend pas de garniture. Le conduit de distribution 102 comprend un orifice d'entrée 121 et un seul orifice de distribution 122 pour former une seule veine V2. Le passage principal interne 123 n'est pas subdivisé en deux passages secondaires, il comprend comme précédemment une portion de coupe 231, formée par une première pièce 25, au niveau de laquelle sont montés les deux ensembles de lames oscillantes 31 et 32, et une portion de formage dont la première partie 232a est formée comme précédemment par la deuxième pièce 26 et dont la deuxième partie 232b est constituée cette fois-ci d'une pièce 128 de section transversale rectangulaire constante formant un simple bec de distribution avec un unique orifice de distribution 122. Le dispositif comprend une seule bande de transport principale 51 pour recevoir la veine V2, et le long de laquelle est positionné le dispositif de coupe et de formage 6.

Les figures 7 et 8 illustrent une variante de réalisation du dispositif illustré aux figures 1 à 3 pour la fabrication d'un produit final P3 multicouches avec garniture. La conduite de distribution 202 se différencie de celle des figures 1 à 3 par le fait qu'elle est équipée d'un premier système de coupe comprenant uniquement un premier ensemble 31 de lames oscillantes horizontales, de manière à former en sortie une veine V3 de viande en couches superposées fourrée, à partir d'une veine inférieure V'3 et d'une veine de viande supérieure V"3. Suivant la figure 9, le produit final texturé P3 obtenu est formé d'une superposition de couches de viande.

La figure 10 illustre une autre variante de réalisation qui se différencie de celle des figures 5 et 6 par le fait que la conduite de distribution 302 est équipée d'un système de coupe 3 qui ne comporte pas d'ensemble de lames oscillantes verticales, les produits finaux P4 obtenus à partir de la veine V4 étant de type multicouches, comme le produit P3, mais sans garniture.

Selon une autre variante de réalisation non illustrée, la conduite de distribution est formée de la pièce 26 précitée, qui est connectée directement à la pompe, et du système à deux becs de distribution, formé par les pièces 27 et 28 précitées, équipées du second système de coupe 4. La lame oscillante sert alors à couper en deux couches la viande délivrée par la pompe, les deux couches étant séparées pour passer chacune dans un passage secondaire. A titre d'exemple, ce dispositif peut être utilisé pour former des portions d'escalope de dinde ou de poulet, fourrées d'une garniture, des escalopes entières étant chargées directement dans la trémie alimentant la pompe.

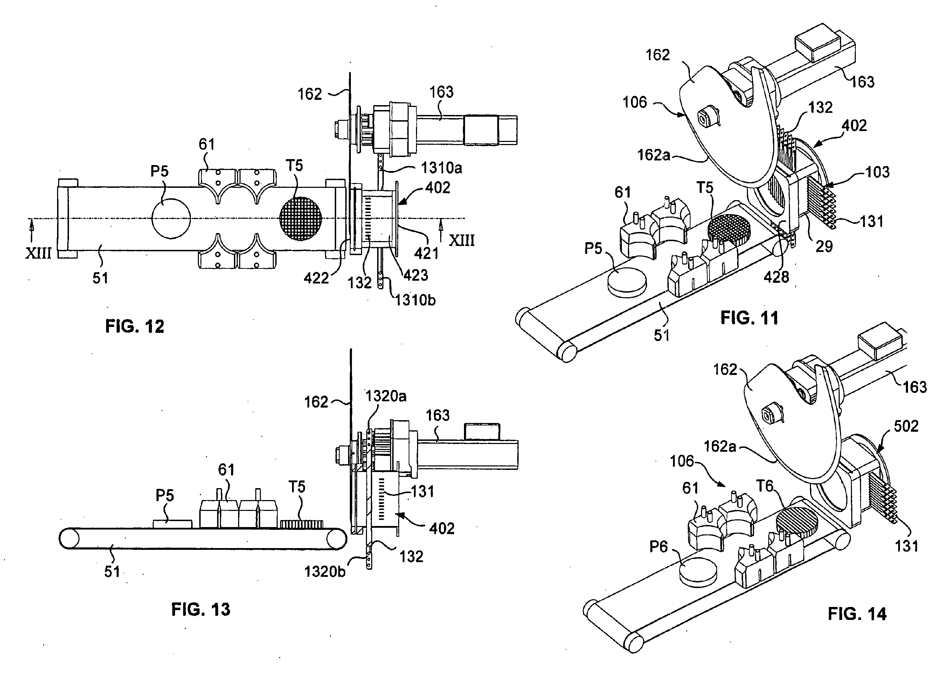

Les figures 11 à 13 illustrent un deuxième mode de réalisation dans lequel la conduite de distribution 402 est formée d'une pièce tubulaire 29 montée directement à la sortie de la pompe à pistons (non illustrée) et comprenant un passage intérieur principal 423 de section transversale intérieure constante correspondant à la section de la sortie de la pompe, avec un orifice d'entrée 421 et un orifice de distribution 422. La conduite est équipée d'un système de coupe 103 formé d'un premier ensemble 131 de lames oscillantes horizontales 1310a, 1310b et d'un second ensemble 132 de lames oscillantes verticales 1320a, 1320b, disposées en aval du premier ensemble pour découper la viande en lamelles ou bandes rectangulaires ou carrées, disposées en couches superposées. Ces deux ensembles 131, 132 sont similaires de ceux 31, 32 décrits précédemment, avec des premières lames et des secondes lames déplacées dans des mouvements de va-et-vient parallèles opposés. Chaque ensemble 131, 132 comprend par exemple 13 lames.

Le dispositif de formage et de coupe 106 comprend, en tant que moyens de coupe, un couteau rotatif 162 comportant une lame plane avec un bord de coupe curviligne 162a, qui est disposée perpendiculairement à l'axe longitudinal de la conduite et parallèlement à la face frontale 428 de la conduite qui sert de marbre de coupe. La lame est entraînée en rotation par un moteur 163 autour d'un axe parallèle à l'axe de la conduite de manière à déplacer le bord de coupe curviligne 162a de la lame devant l'orifice de sortie 422, pour couper verticalement en tranche T5 la viande sortant de la conduite de distribution. Le couteau permet ainsi de couper en petits morceaux les bandes continues formées en sortie du système de coupe 103. Le dispositif comprend une bande de transport 52 sur le brin supérieur de laquelle sont récupérées les tranches T5 de petits morceaux de viande. Les figures 11 à 13 illustrent de manière schématique la tranche en sortie de conduite sur la bande de transport, avec des morceaux de viandes tous orientés verticalement. En pratique, dans le cas de portions obtenues à partir de morceaux de viandes crues, et suivant le nombre de lames et donc suivant la taille des bandes, la tranche T5 qui vient d'être découpée et de tomber sur la bande de transport, se présente sous la forme d'un amas de petits morceaux de viandes émincés orientés dans tous les sens. Des moyens de formage latéraux 61 et verticaux analogues à ceux décrits précédemment sont disposés le long de la bande 52 pour former le contour de portions P5 sensiblement circulaires, et pour leur conférer l'épaisseur souhaitée.

La figure 14 illustre une variante de réalisation dans laquelle la conduite de distribution 502 comprend uniquement un premier ensemble de lames oscillantes horizontales 131, pour obtenir en sortie de conduite des tranches T6 de viande en bandes orientées principalement transversalement, puis des portions P6 circulaires en sortie des moyens de formage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de fabrication de portions de produits alimentaires en morceaux, en particulier de pavés de viandes fraîches en muscles, comprenant
- au moins une pompe apte à délivrer en sortie un débit sensiblement constant de produit alimentaire en morceaux,
- une conduite de distribution tubulaire connectée à la sortie de refoulement de ladite pompe pour recevoir dans son passage principal interne le produit alimentaire sortant de la pompe, et comprenant au moins un orifice de distribution, et
- des moyens de coupe et de formage agissant sur le produit alimentaire distribué par l'orifice de sortie de la conduite de distribution pour former des portions de produits alimentaires,
**caractérisé en ce que** ladite conduite de distribution (2, 102, 202, 302, 402, 502) est équipée d'un système de coupe (3, 103, 4) comprenant au moins un moyen de coupe (310a, 310b, 320a, 320b, 410, 1310a, 1310b, 1320a, 1320b) traversant transversalement de part en part ledit passage principal interne (23, 123, 423) de la conduite de distribution pour découper le produit alimentaire en au moins deux couches, de manière à obtenir des portions (P1, P2, P3, P4, P5, P6) de produit alimentaire texturées en sortie des moyens de formage et de coupe (6, 106).

2. Dispositif selon la revendication 1, **caractérisé en ce que** le système de coupe (3, 103) comprend un premier ensemble (31, 131) de moyens de coupe (310a, 310b, 1310a, 1310b), disposés parallèlement les uns au dessus des autres, pour découper le produit alimentaire provenant de la pompe en plusieurs couches.

3. Dispositif selon la revendication 2, **caractérisé en ce que** le système de coupe (3, 103) comprend un deuxième ensemble (32, 132) de moyens de coupe (320a, 320b, 1320a, 1320b) disposées parallèlement les unes au dessus des autres, en aval du premier ensemble (31, 131) de moyens de coupe, pour découper en bandes chacune des couches résultant du premier ensemble de moyens de coupe.

4. Dispositif selon l'une des revendications 1 à 3, **caractérisé en ce que** chaque moyen de coupe du système de coupe comprend une lame plane oscillante (310a, 310b, 320a, 320b, 410, 1310a, 1310b, 1320a, 1320b).

5. Dispositif selon la revendication 4, en combinaison avec la revendication 2 ou 3, **caractérisé en ce que** chaque ensemble (31, 131, 32, 132) de lames comprend des premières lames oscillantes (310a, 320a, 1310a, 1320a) aptes à être déplacées par un premier système de déplacement dans un mouvement de va-de-vient, et des secondes lames oscillantes (310b, 320b, 1310b, 1320b), intercalées entre les premières lames, et déplacées par un second système de déplacement dans un mouvement de va-et-vient opposé à celui des premières lames oscillantes.

6. Dispositif selon l'une des revendications 1 à 5, **caractérisé en ce que** les moyens de coupe et de formage (6) comprennent une bande transporteuse de formage (51) pour recevoir une veine de produit alimentaire issue de la conduite de distribution, et le long de celle-ci, des moyens pour couper ladite veine en portions, des moyens de formage latéraux (61) agissant simultanément de chaque côté de ladite veine pour former le contour desdites portions, et des moyens de formage verticaux coopérant avec lesdits moyens de formage latéraux pour conférer auxdites portions l'épaisseur souhaitée.

7. Dispositif selon l'une des revendications 1 à 6, **caractérisé en ce que** la conduite de distribution (2, 202) est équipée d'un système de coupe comprenant un moyen de coupe (410) disposé en amont de moyens de séparation (27, 28) pour séparer le passage principal interne (23) de la conduite de distribution en deux passages secondaires (24a, 24b), de manière à former une veine de produit alimentaire supérieure (V"1, V"3) et une veine de produit alimentaire inférieure (V'1, V"3), ledit dispositif comprenant une bande de transport principale (51) pour recevoir la veine inférieure de produit alimentaire, une bande de transport secondaire (52), défilant en continue, disposée au-dessus de la bande de transport principale pour recevoir la veine supérieure, et des moyens de dépôt de garniture aptes à déposer une garniture sur la veine inférieure, ladite bande secondaire étant apte à transporter et déposer ladite veine supérieure sur ladite veine inférieure et la garniture.

8. Dispositif selon l'une des revendications 1 à 5, **caractérisé en ce que** les moyens de coupe et de formage comprennent un couteau (162) apte à trancher le produit alimentaire sortant de la conduite de distribution (402, 502), une bande de transport (51) pour récupérer les tranches (T5, T6) formées par ledit couteau, et le long de cette bande de transport, des moyens de formage latéraux (61) pour former le contour desdites portions et des moyens de formage verticaux pour conférer auxdites portions l'épaisseur souhaitée.

9. Dispositif selon l'une des revendications 1 à 8, **caractérisé en ce que** ladite pompe (1) est une pompe de type pompe rotative à pistons, comprenant un stator (12) définissant une cavité cylindrique, un rotor ou barillet (13) logé dans ladite cavité cylindrique, apte à être entraîné en rotation par un moteur, ledit rotor comprenant un ensemble d'alésages (14) circonférentiellement espacés, dans lesquels sont montés des pistons (15), une came mécanique coopérant avec les pistons pour provoquer lors de la rotation du barillet un mouvement alterné de va-et-vient desdits pistons entre une position basse et une position haute, un couvercle fermant la cavité cylindrique, un orifice d'alimentation venant en communication avec au moins une chambre cylindrique formée par un alésage cylindrique du barillet et son piston associé, et destiné à être en communication avec une trémie, un orifice de refoulement apte à venir simultanément en communication avec au moins deux chambres cylindriques consécutives.

10. Dispositif selon la revendication 9, **caractérisé en ce que** ladite pompe comprend en outre des moyens de mise sous vide des chambres cylindriques pour leur remplissage, lesdits moyens de mise sous vide comportant au moins un canal de mise sous vide débouchant dans la partie inférieure de chaque chambre cylindrique, lesdits moyens de mise sous vide étant aptes à mettre sous vide par le bas chaque chambre cylindrique par son canal de mise sous vide lorsque son piston associé est en position basse.

11. Dispositif selon la revendication 9 ou 10, **caractérisé en ce que** ladite pompe comprend en outre des moyens de coupe, comportant une lame disposée le long du bord aval de l'orifice d'alimentation, pour couper les morceaux de produits dépassant des chambres cylindriques lors de leur passage au-delà de l'orifice d'alimentation.

12. Procédé de fabrication de portions de produits alimentaires en morceaux, en particulier de pavés de viandes fraîches en muscles, **caractérisé en ce qu'**il comprend
a) une étape de formation d'un flux sensiblement constant d'un produit alimentaire en morceaux dans une conduite de distribution (2, 102, 202, 302, 402, 502),
b) une étape de découpe dans ladite conduite de distribution du produit alimentaire en au moins deux couches, et
c) une étape de coupe et de formage du produit alimentaire en sortie de conduite de distribution pour former des portions (P1-P6) de produits alimentaires ayant la texture du produit alimentaire de départ.

13. Procédé selon la revendication 12, **caractérisé en ce que**, à l'étape a), le produit alimentaire est découpé en une pluralité de couches horizontales continues superposées.

14. Procédé selon la revendication 13, **caractérisé en ce que**, à l'étape a), chaque couche horizontale de produit alimentaire est découpée en une pluralité de bandes continues.

15. Procédé selon la revendication 13 ou 14, **caractérisé en ce que** le produit alimentaire en sortie de la conduite de distribution (2, 102, 202, 302) se présente sous la forme d'au moins une veine continue (V1-V4), l'étape c) comprenant la coupe et la mise en forme de ladite veine en portions de produit alimentaire en couches superposées (P3, P4) ou en bandes longitudinales (P1, P2).

16. Procédé selon l'une des revendications 12 à 15, **caractérisé en ce que** le produit alimentaire en sortie de la conduite de distribution (2, 202) se présente sous la forme d'une veine inférieure continue (V'1, V'3), et d'une veine supérieure continue (V"1, V"3) amenée en recouvrement de la veine inférieure, le procédé comprenant en outre une étape consistant à déposer une garniture (G) sur la veine inférieure avant son recouvrement par la veine supérieure, pour former une veine principale (V1, V3) continue fourrée, l'étape c) comprenant la coupe et la mise en forme de ladite veine principale en portions de produits alimentaire fourrées d'une garniture (P1, P3).

17. Procédé selon l'une des revendications 13 ou 14, **caractérisé en ce qu'**à l'étape c), le produit alimentaire en sortie de conduite de distribution (402, 502) est découpée en tranches (T5, T6) pour former après mise en forme des portions de produit alimentaire en bandes transversales ou en petits morceaux de produit alimentaire.

## Patentansprüche

1. Vorrichtung zur Herstellung von Teilen von Lebensmittelprodukten in Stücken, insbesondere von Steaks von frischem Muskelfleisch, umfassend
- mindestens eine Pumpe, die geeignet ist, am Ausgang eine im Wesentlichen konstante Menge eines Lebensmittelproduktes in Stücken zu liefern,
- eine röhrenförmige Verteilungsleitung, die an den Förderausgang der Pumpe angeschlossen ist, um in ihrem inneren Hauptdurchgang das aus der Pumpe kommende Lebensmittelprodukt aufzunehmen, und umfassend mindestens eine Verteilungsöffnung, und
- Schneid- und Formungsmittel, die auf das von der Ausgabeöffnung der Verteilungsleitung verteilte Produkt einwirken, um Teile von Lebensmittelprodukten zu bilden,
**dadurch gekennzeichnet, dass** die Verteilungsleitung (2, 102, 202, 302, 402, 502) mit einem Schneidsystem (3, 103, 4) ausgestattet ist, umfassend mindestens ein Schneidmittel (310a, 310b, 320a, 320b, 410, 1310a, 1310b, 1320a, 1320b), das quer durch den inneren Hauptdurchgang (23, 123, 423) der Verteilungsleitung hindurchgeht, um das Lebensmittelprodukt in mindestens zwei Schichten zu schneiden, um texturierte Teile (P1, P2, P3, P4, P5, P6) eines Lebensmittelproduktes am Ausgang der Schneid- und Formungsmittel (6, 106) zu erhalten.

2. Vorrichtung nach Anspruch 1, **dadurch gekennzeichnet, dass** das Schneidsystem (3, 103) eine erste Einheit (31, 131) von Schneidmitteln (310a, 310b, 1310a, 1310b) umfasst, die parallel übereinander angeordnet sind, um das von der Pumpe kommende Lebensmittelprodukt in mehrere Schichten zu schneiden.

3. Vorrichtung nach Anspruch 2, **dadurch gekennzeichnet, dass** das Schneidsystem (3, 103) eine zweite Einheit (32, 132) von Schneidmitteln (320a, 320b, 1320a, 1320b) umfasst, die parallel übereinander stromabwärts zu der ersten Einheit (31, 131) von Schneidmitteln angeordnet sind, um jede der von der ersten Einheit von Schneidmitteln kommenden Schichten in Streifen zu schneiden.

4. Vorrichtung nach einem der Ansprüche 1 bis 3, **dadurch gekennzeichnet, dass** jedes Schneidmittel des Schneidsystems eine flache oszillierende Schneidklinge (310a, 310b, 320a, 320b, 410, 1310a, 1310b, 1320a, 1320b) umfasst.

5. Vorrichtung nach Anspruch 4 in Kombination mit Anspruch 2 oder 3, **dadurch gekennzeichnet, dass** jede Einheit (31, 131, 32, 132) von Schneidklingen erste oszillierende Schneidklingen (310a, 320a, 1310a, 1320a), die geeignet sind, von einem ersten Verschiebesystem in einer Hin- und Herbewegung verschoben zu werden, und zweite oszillierende Schneidklingen (310b, 320b, 1310b, 1320b) umfasst, die zwischen den ersten Schneidklingen angeordnet sind und von einem zweiten Verschiebesystem in einer zu jener der ersten oszillierenden Schneidklingen entgegengesetzten Hin- und Herbewegung verschoben werden.

6. Vorrichtung nach einem der Ansprüche 1 bis 5, **dadurch gekennzeichnet, dass** die Schneid- und Formungsmittel (6) ein Formungsförderband (51), um einen Lebensmittelproduktstrom, der von der Verteilungsleitung kommt, aufzunehmen, und entlang desselben Mittel zum Schneiden des Stroms in Teile umfassen, wobei seitliche Formungsmittel (61) gleichzeitig auf jeder Seite des Stroms einwirken, um die Kontur der Teile zu bilden, und wobei vertikale Formungsmittel mit den seitlichen Formungsmitteln zusammenwirken, um den Teilen die gewünschte Dicke zu verleihen.

7. Vorrichtung nach einem der Ansprüche 1 bis 6, **dadurch gekennzeichnet, dass** die Verteilungsleitung (2, 202) mit einem Schneidsystem ausgestattet ist, umfassend ein Schneidmittel (410), das stromaufwärts zu Trennmitteln (27, 28) angeordnet ist, um den inneren Hauptdurchgang (23) von der Verteilungsleitung in zwei Nebendurchgänge (24a, 24b) zu trennen, um einen oberen Lebensmittelproduktstrom (V''1, V''3) und einen unteren Lebensmittelproduktstrom (V'1, V''3) zu bilden, wobei die Vorrichtung ein Hauptförderband (51), um den unteren Lebensmittelproduktstrom aufzunehmen, ein kontinuierlich ablaufendes Nebenförderband (52), das über dem Hauptförderband angeordnet ist, um den oberen Strom aufzunehmen, und Mittel zum Auftragen einer Füllung umfasst, die geeignet sind, eine Füllung auf den unteren Strom aufzutragen, wobei das Nebenförderband geeignet ist, den oberen Strom auf den unteren Strom und die Füllung zu befördern und aufzubringen.

8. Vorrichtung nach einem der Ansprüche 1 bis 5, **dadurch gekennzeichnet, dass** die Schneid- und Formungsmittel ein Messer (162), das geeignet ist, das aus der Verteilungsleitung (402, 502) kommende Lebensmittelprodukt durchzuschneiden, ein Förderband (51), um die Scheiben (T5, T6), die von dem Messer gebildet werden, aufzunehmen, und entlang dieses Förderbandes seitliche Formungsmittel (61), um die Kontur der Teile zu bilden, und vertikale Formungsmittel umfassen, um den Teilen die gewünschte Dicke zu verleihen.

9. Vorrichtung nach einem der Ansprüche 1 bis 8, **dadurch gekennzeichnet, dass** die Pumpe (1) eine Pumpe vom Typ Rotationskolbenpumpe ist, umfassend einen Stator (12), der einen zylindrischen Hohlraum definiert, einen Rotor oder eine Trommel (13), die in dem zylindrischen Hohlraum angeordnet und geeignet sind, von einem Motor in Drehung angetrieben zu werden, wobei der Rotor eine Gesamtheit von in Umfangsrichtung beabstandeten Bohrungen (14) umfasst, in denen Kolben (15) montiert sind, eine mechanische Nocke, die mit den Kolben zusammenwirkt, um bei der Drehung der Trommel eine alternierende Hin- und Herbewegung der Kolben zwischen einer unteren Position und einer oberen Position hervorzurufen, einen Deckel, der den zylindrischen Hohlraum verschließt, eine Versorgungsöffnung, die mit mindestens einer zylindrischen Kammer, die von einer zylindrischen Bohrung der Trommel und ihrem zugehörigen Kolben gebildet ist, in Verbindung kommt und dazu bestimmt ist, mit einem Trichter verbunden zu sein, eine Förderöffnung, die geeignet ist, gleichzeitig mit mindestens zwei aufeinanderfolgenden zylindrischen Kammern in Verbindung zu stehen.

10. Vorrichtung nach Anspruch 9, **dadurch gekennzeichnet, dass** die Pumpe ferner Mittel zum Setzen der zylindrischen Kammern unter Vakuum zu ihrer Füllung, wobei die Mittel zur Herstellung eines Vakuums mindestens einen Kanal zur Herstellung eines Vakuums umfassen, der in den unteren Teil jeder zylindrischen Kammer mündet, wobei die Mittel zur Herstellung eines Vakuums geeignet sind, jede zylindrische Kammer von unten über ihren Kanal zur Herstellung eines Vakuums unter Vakuum zu setzen, wenn sich ihr zugehöriger Kolben in der unteren Position befindet.

11. Vorrichtung nach Anspruch 9 oder 10, **dadurch gekennzeichnet, dass** die Pumpe ferner Schneidmittel umfasst, die eine Schneidklinge aufweisen, die entlang des stromabwärtigen Randes der Versorgungsöffnung angeordnet ist, um die Produktstücke, die von den zylindrischen Kammern bei ihrem Durchgang über die Versorgungsöffnung hinausragen, abzuschneiden.

12. Verfahren zur Herstellung von Teilen von Lebensmittelprodukten in Stücken, insbesondere von Steaks von frischem Muskelfleisch, **dadurch gekennzeichnet, dass** es umfasst:
a) einen Schritt der Bildung eines im Wesentlichen konstanten Stroms eines Lebensmittelproduktes in Stücken in einer Verteilungsleitung (2, 102, 202, 302, 402, 502),
b) einen Schritt des Schneidens des Lebensmittelproduktes in der Verteilungsleitung in mindestens zwei Schichten, und
c) einen Schritt des Schneidens und Formens des Lebensmittelprodukts am Ausgang einer Verteilungsleitung, um Teile (P1-P6) von Lebensmittelprodukten zu bilden, die die Textur des Ausgangslebensmittelproduktes haben.

13. Verfahren nach Anspruch 12, **dadurch gekennzeichnet, dass** in Schritt a) das Lebensmittelprodukt in eine Vielzahl von übereinander liegenden durchgehenden horizontalen Schichten geschnitten wird.

14. Verfahren nach Anspruch 13, **dadurch gekennzeichnet, dass** in Schritt a) jede horizontale Schicht eines Lebensmittelprodukts in eine Vielzahl von durchgehenden Streifen geschnitten wird.

15. Verfahren nach Anspruch 13 oder 14, **dadurch gekennzeichnet, dass** das Lebensmittelprodukt am Ausgang der Verteilungsleitung (2, 102, 202, 302) in Form mindestens eines kontinuierlichen Stroms (V1-V4) vorhanden ist, wobei Schritt c) das Schneiden und Formen des Stroms in Teile eines Lebensmittelprodukts in übereinander liegenden Schichten (P3, P4) oder in Längsstreifen (P1, P2) umfasst.

16. Verfahren nach einem der Ansprüche 12 bis 15, **dadurch gekennzeichnet, dass** das Lebensmittelprodukt am Ausgang der Verteilungsleitung (2, 202) in Form eines unteren kontinuierlichen Stroms (V'1, V'3) und eines oberen kontinuierlichen Stroms (V''1, V''3), der den unteren Strom überdeckt, vorhanden ist, wobei das Verfahren ferner einen Schritt umfasst, darin bestehend, eine Füllung (G) auf den unteren Strom vor seiner Überdeckung durch den oberen Strom aufzutragen, um einen gefüllten kontinuierlichen Hauptstrom (V1, V3) zu bilden, wobei Schritt c) das Schneiden und Formen des Hauptstroms in mit einer Füllung gefüllte Teile von Lebensmittelprodukten (P1, P3) umfasst.

17. Verfahren nach einem der Ansprüche 13 oder 14, **dadurch gekennzeichnet, dass** in Schritt c) das Lebensmittelprodukt am Ausgang einer Verteilungsleitung (402, 502) in Scheiben (T5, T6) geschnitten wird, um nach der Formung Teile eines Lebensmittelprodukts in Querstreifen oder in kleinen Stücken eines Lebensmittelprodukts zu bilden.

## Claims

1. Device for producing portions of food products in pieces, in particular patties of fresh meat in muscle, comprising
- at least one pump able to deliver at the output a substantially constant flow of food product in pieces,
- a tubular distribution duct connected to the discharge outlet of said pump in order to receive in the main internal passage therein the food product exiting the pump, and comprising at least one distribution orifice, and
- cutting and shaping means acting on the food product distributed by the discharge orifice of the distribution duct in order to form portions of food products,
**characterised in that** said distribution duct (2, 102, 202, 302, 402, 502) is provided with a cutting system (3, 103, 4) comprising at least one cutting means (310a, 310b, 320a, 320b, 410, 1310a, 1310b, 1320a, 1320b) transversally crossing on either side said main internal passage (23, 123, 423) of the distribution duct in order to cut the food product into at least two layers, in such a way as to obtain textured portions (P1, P2, P3, P4, P5, P6) of food product at the output of the cutting and shaping means (6, 106).

2. Device according to claim 1, **characterised in that** the cutting system (3, 103) comprises a first set (31, 131) of cutting means (310a, 310b, 1310a, 1310b), arranged in a parallel manner one above one another, in order to cut the food product coming from the pump into several layers.

3. Device according to claim 2, **characterised in that** the cutting system (3, 103) comprises a second set (32, 132) of cutting means (320a, 320b, 1320a, 1320b) arranged in a parallel manner one above one another, downstream of the first set (31, 131) of cutting means, in order to cut into strips each of the layers resulting from the first set of cutting means.

4. Device according to any of claims 1 to 3, **characterised in that** each cutting means of the cutting system comprises a flat reciprocating blade (310a, 310b, 320a, 320b, 410, 1310a, 1310b, 1320a, 1320b).

5. Device according to claim 4, in combination with claim 2 or 3, **characterised in that** each set (31, 131, 32, 132) of blades comprises first reciprocating blades (310a, 320a, 1310a, 1320a) able to be displaced by a first movement system in a back-and-forth movement, and second reciprocating blades (310b, 320b, 1310b, 1320b), inserted between the first blades, and displaced by a second movement system in a back-and-forth movement opposed to that of the first reciprocating blades.

6. Device according to any of claims 1 to 5, **characterised in that** the cutting and shaping means (6) include a shaping conveying belt (51) in order to receive a stream of food product coming from the distribution duct, and along the latter, means for cutting said stream into portions, lateral shaping means (61) acting simultaneously of each side of said stream in order to shape the contour of said portions, and vertical shaping means cooperating with said lateral shaping means in order to confer the desired thickness to said portions.

7. Device according to any of claims 1 to 6, **characterised in that** the distribution duct (2, 202) is provided with a cutting system comprising a cutting means (410) arranged upstream of separating means (27, 28) for separating the main internal passage (23) of the distribution duct into two secondary passages (24a, 24b), so as to form an upper stream of food product (V"1, V"3) and a lower stream of food product (V'1, V"3), said device comprising a main transporting belt (51) in order to receive the lower stream of food product, a secondary transporting belt (52), advancing continuously, arranged above the main transporting belt in order to receive the upper stream, and filling depositing means for able to deposit a filling on the lower stream, said secondary transporting belt being able to transport and deposit said upper stream on said lower stream and the filling.

8. Device according to any of claims 1 to 5, **characterised in that** the cutting and shaping means include a knife (162) able to slice the food product exiting the distribution duct (402, 502), a transport belt (51) to recover the slices (T5, T6) formed by said knife, and along this transport belt, lateral shaping means (61) to shape the contour of said portions and vertical shaping means to confer the desired thickness to said portions.

9. Device according to any of claims 1 to 8, **characterised in that** said pump (1) is a pump of the rotary piston type, comprising a stator (12) defining a cylindrical cavity, a rotor or barrel (13) housed in said cylindrical cavity, able to be driven in rotation by a motor, said rotor comprising a set of bore holes (14) circumferentially spaced, wherein are mounted pistons (15), a mechanical cam cooperating with the pistons in order to provoke during the rotation of the drum a back-and-forth alternating movement of said pistons between a low position and a high position, a lid closing the cylindrical cavity, a supply orifice that comes into communication with at least one cylindrical chamber formed by a cylindrical hole of the barrel and the piston associated thereof, and intended to be in communication with a hopper, a discharge outlet able to come simultaneously into communication with at least two consecutive cylindrical chambers.

10. Device according to claim 9, **characterised in that** said pump further comprises vacuuming means for vacuuming cylindrical chambers for the filling thereof, said vacuuming means comprising at least one vacuuming channel exiting in the lower portion of each cylindrical chamber, said vacuuming means being able to vacuum via the bottom each cylindrical chamber via the vacuuming channel thereof when the piston associated thereof is in low position.

11. Device according to claim 9 or 10, **characterised in that** said pump further comprises cutting means, comprising a blade arranged along the downstream edge of the supply orifice, in order to cut the pieces of product extending beyond the cylindrical chambers during the passage thereof beyond the supply orifice.

12. Method of producing portions of food products in pieces, in particular patties of fresh meat in muscle, **characterised in that** it comprises
a) a step of forming a substantially constant flow of a food product in pieces in a distribution duct (2, 102, 202, 302, 402, 502),
b) a step of cutting in said distribution duct of the food product into at least two layers, and
c) a step of cutting and shaping of the food product at the output of the distribution duct in order to form portions (P1-P6) of food products having the texture of the initial food product.

13. Method set forth in claim 12, **characterised in that**, in step a), the food product is cut into a plurality of superimposed continuous horizontal layers.

14. Method set forth in claim 13, **characterised in that**, in step a), each horizontal layer of food product is cut into a plurality of continuous strips.

15. Method set forth in claim 13 or 14, **characterised in that** the food product at the output of distribution duct (2, 102, 202, 302) has the form of at least one continuous stream (V1-V4), with step c) comprising the cutting and the shaping of said stream into portions of food product in superimposed layers (P3, P4) or in longitudinal strips (P1, P2).

16. Method according to any of claims 12 to 15, **characterised in that** the food product at the output of the distribution duct (2, 202) has the form of a continuous lower stream (V'1, V'3), and of an continuous upper stream (V"1, V"3) brought to overlap the lower stream, with the method further comprising a step consisting in depositing a filling (G) on the lower stream before it is covered by the upper stream, in order to form a main continuous filled stream (V1, V3), with step c) comprising the cutting and the shaping of said main stream into portions of food products filled with a filling (P1, P3).

17. Method according to any of claims 13 or 14, **characterised in that** in step c), the food product coming out of distribution duct (402, 502) is cut into slices (T5, T6) in order to form, after shaping, portions of food product in transversal strips or in small pieces of food product.
